## Europäisches Patentamt

(19) **European Patent Office**

**Office européen des brevets**

(11) Veröffentlichungsnummer: **0 180 082**
**B1**

(12) **EUROPÄISCHE PATENTSCHRIFT**

(45) Veröffentlichungstag der Patentschrift:
**16.09.87**

(51) Int. Cl.⁴: **H 01 B 1/12**

(21) Anmeldenummer: **85112972.6**

(22) Anmeldetag: **12.10.85**

(54) **Verwendung von elektrisch leitfähigen Polymerisaten zur Absorption von Infrarotstrahlung.**

(30) Priorität: **19.10.84 DE 3438390**

(43) Veröffentlichungstag der Anmeldung:
**07.05.86 Patentblatt 86/19**

(45) Bekanntmachung des Hinweises auf die Patenterteilung:
**16.09.87 Patentblatt 87/38**

(84) Benannte Vertragsstaaten:
**BE DE FR GB**

(73) Patentinhaber: **BASF Aktiengesellschaft,
Carl-Bosch-Strasse 38, D-6700 Ludwigshafen (DE)**

(72) Erfinder: **Naarmann, Herbert, Dr., Haardtblick 15,
D-6719 Wattenheim (DE)**
Erfinder: **Koehler, Gernot, Dr., Berner Weg 32,
D-6700 Ludwigshafen (DE)**

(56) Entgegenhaltungen:
**EP - A - 0 045 366
WO - A - 84/02030
FR - A - 2 281 370**

**CHEMICAL ABSTRACTS, Band 102, Nr. 16, April 1985,
Seite 649, Zusammenfassung Nr. 141603k, Columbus,
Ohio, US; F. WUDL et al.: "Novel organic conductors:
effect of structure on band gap"**

## Beschreibung

Die Erfindung betrifft die Verwendung von elektrisch leitfähigen Homo- und Copolymerisaten heterocyclischer Verbindungen zur Absorption von Infrarotstrahlung.

In militärischen Bereich bedient man sich der Infrarotlenkung, um Flugkörper mit dem angestrebten Ziel in Kollision zu bringen. Dabei wird die Infrarotstrahlung des Ziels, z.B. eines Fahrzeuges, Flugzeuges oder Schiffes, die von der Wärme des Antriebs herrührt, vom Empfänger im Zielsuchkopf des Flugkörpers aufgenommen und in Kurskorrektursignale umgewandelt, die den Flugkörper ins Ziel lenken.

Bei einer anderen militärischen Anwendung wird die vom Ziel ausgehende Infrarotstrahlung mit Hilfe von Nachtsichtgeräten in sichtbares Licht umgewandelt, die es ermöglichen, das Ziel zu erkennen. Auch können Ziele mit Infrarotstrahlung angestrahlt werden, so dass sie mit Hilfe von Nachtsichtgeräten erkennbar werden.

Aus der EP-A-O 045 366 sind elektrisch leitfähige Heteropolyphenylene einer allgemeinen Formel bekannt, die Leitsalzanionen enthalten. Derartige leitfähige Heteropolyphenylene können in der Elektrotechnik zur Herstellung von Sonnenzellen, zur Umwandlung und Fixierung von Strahlen und zur Herstellung elektrischer und magnetische Schalter Verwendung finden.

Aufgabe der vorliegenden Erfindung ist, es eine Stoffklasse aufzuzeigen, die zur Absorption von Infrarotstrahlung verwendet werden kann.

Es wurde nun gefunden, dass die Aufgabe gelöst werden kann durch Verwendung von elektrisch leitfähigen Homo- und Copolymerisaten von Verbindungen aus der Klasse der 5-gliedrigen heterocyclischen Verbindungen mit konjugierten $\pi$-Elektronensystem mit Stickstoff, Sauerstoff oder Schwefel als Heteroatom, die ein Leitsalzanion enthalten, als Oberflächenbeschichtung auf Fahrzeugen, Flugzeugen oder Schiffen, zur Absorption von Infrarotstrahlung.

Unter Verbindungen aus der Klasse der 5-gliedrigen heterocyclischen Verbindungen mit einem konjugierten $\pi$-Elektronensystem, die Stickstoff, Sauerstoff oder Schwefel als Heteroatom enthalten, werden im Rahmen dieser Erfindung Verbindungen aus der Klasse der Pyrrole, der Thiophene und der Furane verstanden.

Verbindungen aus der Klasse der Pyrrole sind das unsubstituierte Pyrrol selber als auch die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole. Bei der Herstellung der erfindungsgemässen Copolymeren können die Pyrrole allein oder in Mischung miteinander eingesetzt werden, so dass die Copolymere ein oder mehrere verschiedene Pyrrole eingebaut enthalten können. Vorzugsweise leiten sich die wiederkehrenden Pyrrol-Einheiten in den Copolymeren im wesentlichen von unsubstituiertem Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Verbindungen aus der Klasse der Thiophene sind das unsubstituierte Thiophen selbst, das 2-, der 3-, Methylthiophen, das 2-, 3-, Ethylthiophen oder andere alkylsubstituierte Thiophene, ebenso die 2fach mit Alkyl substituierten Thiophene, wie 2,3-Diethylthiophen oder auch die chlorsubstituierten Thiophene, wie 2-Chlor- oder 3-Bromthiophen, 3,4-Dichlorthiophen. Ebenso kommen Phenylthiophene, wie 2-Phenylthiophen oder das 3-Benzylthiophen in Frage.

Verbindungen aus der Klasse der Furane sind das unsubstituierte Furan selbst als auch die substituierten Furane, wie Alkylfurane, z.B. 3-Methyl-, 2-Ethyl- oder 3-Ethyl-, ausserdem 2,2-Dimethyl- oder 2,3-Diethyl-Furan, sowie chlorsubstituierte Furane, wie 2-Chlorfuran, 3-Bromfuran oder 3-Dichlorfuran, ebenso 3,4-Difurylfuran oder das 2-Phenylfuran. Bevorzugt ist das unsubstituierte Furan selbst.

Die obengenannten 5-gliedrigen heterocyclischen Verbindungen mit konjugiertem $\pi$-Elektronensystem können aber auch mit bis zu 20 Gew.-% anderen mit diesen Verbindungen copolymerisierbaren Verbindungen copolymerisiert werden. Solche Verbindungen sind z.B. das Thiazol, das Oxazol, das Imidazol. Weiterhin kommen als Comonomere Aminophenanthren, Benzidin, Semidin, Aminocrysen, Aminocarbazol sowie Anilin und/oder p-Phenylendiamin in Frage.

Zur Herstellung der Homo- und Copolymeren der Verbindungen aus der Klasse der 5-gliedrigen Heterocyclen können die Monomeren, das sind die Pyrrole, Thiophene oder Furane und gegebenenfalls die Comonomeren, in einem Elektrolytlösungsmittel in Gegenwart eines geeigneten Leitsalzes anodisch oxidiert und dabei polymerisiert werden. Die Gesamtmonomer-Konzentration beträgt hierbei im allgemeinen etwa 0,1 Mol pro Liter Lösungsmittel. Da die elektrolytische Oxidation meist nur bis zu kleinen Umsätzen durchgeführt wird, kann diese Konzentration in weiten Grenzen unterschritten, aber auch überschritten werden.

Das erfindungsgemässe Verfahren wird in Elektrolytlösungsmitteln, die die Monomeren und die Leitsalze zu lösen vermögen, durchgeführt. Das Lösungsmittel selbst sollte aprotisch sein. Bevorzugte Elektrolytlösungsmittel sind z.B. Aceton, Acetonitril, Dimethylformamid, Dimethylsulfoxid, Methylenchlorid, N-Methylpyrrolidon oder Propylencarbonat.

Dem Elektrolytlösungsmittel werden weitere als Leitsalz wirkende Verbindungen zugesetzt.

Als Leitsalze dienen bevorzugt ionische oder ionisierbare Verbindungen mit Anionen starker, oxidierender Säuren oder auch von, gegebenenfalls mit Nitro-Gruppen substituierten Aromaten mit sauren Gruppen. Als Kationen für diese Leitsalze kommen neben den Erdalkalimetall-Kationen und H[+], insbesondere die Alkalimetall-Kationen, vorzugsweise Li[+], Na[+] oder K[+], in Betracht. Sehr günstig sind die Onium-Kationen, vor allem des Stickstoffs und des Phosphors, etwa des Typs $R^4N^+$ und $R^4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Unter den Ammonium- und Phosphonium-Kationen sind diejenigen besonders bevorzugt, in denen R Wasserstoff und/oder einen Alkylrest mit 1 bis 4 C-Atomen darstellt. Beispielhaft für bevorzugte Onium-Kationen seien neben dem $NH^{4+}$-Ion insbesondere das Tetramethylammonium-, das Tetrathylammonium,-, das Tetra-n-butylammonium-, das Triphenylphosphonium- und das Trin-butylphosphonium-Kation genannt.

Als Anionen für das Leitsalz haben sich $BF^{4-}$, $AsF_4^-$, $R\text{-}SO_3^-$, $AsF_6^-$, $SbF_6^-$, $SbCl_6^-$, $ClO_4^-$, $HSO_4^-$ und $SO_4^{2-}$ als günstig erwiesen. Eine weitere Gruppe von Leitsalz-Anionen, die erfindungsgemäss mit besonderem Vorteil eingesetzt werden, leiten sich vom Aromaten mit sauren Gruppen ab. Hierzu gehören das $C_6H_5COO^-$-Anion sowie insbesondere die Anionen von gegebenenfalls mit Alkylgruppen substituierten aromatischen Sulfonsäuren. Wegen der damit erzielbaren guten Ergebnisse sind Leitsalze mit dem Benzolsulfonsäure-Anion $C_6H_5SO_3$ ganz besonders bevorzugt.

Die Leitsalzkonzentration beträgt im allgemeinen 0,001 bis 1, vorzugsweise 0,01 bis 0,1 Mol/Liter.

Zur Herstellung der Polymeren aus der Klasse der 5-gliedrigen Heterocyclen wird bevorzugt in einer einfachen, üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise aus Nickel, Titan oder aus Graphit sein; auch Edelmetallelektroden, bevorzugt Platinelektroden, können verwendet werden. Dabei ist es günstig, wenn zumindest die Anode, insbesondere aber beide Elektroden, flächig ausgebildet sind. Je nach Verfahrensführung können unterschiedliche Typen von Homo- und Copolymeren erhalten werden. Zur Kontrolle der Schichtstärke der abgeschiedenen Filme ist eine Messung der Strommenge (Amp/s) zweckmässig.

Normalerweise führt man die Elektrolyse bei Raumtemperatur und unter Inertgas durch. Da sich die Reaktionstemperatur bei der Polymerisation der Pyrrole als unkritisch erwiesen hat, kann die Temperatur jedoch in einem breiten Bereich variiert werden, solange die Erstarrungstemperatur bzw. Siedetemperatur des Elektrolytlösungsmittels nicht unter- bzw. überschritten wird. Im allgemeinen hat sich eine Reaktionstemperatur im Bereich von −40 bis +40°C als sehr vorteilhaft erwiesen.

Als Stromquelle für den Betrieb der elektrolytischen Zelle, in der das erfindungsgemässe Verfahren durchgeführt wird, eignet sich jede Gleichstromquelle, wie z.B. eine Batterie, die eine hinreichend hohe elektrische Spannung liefert. Zweckmässigerweise liegt die Spannung im Bereich von etwa 1 bis 25 Volt; als besonders vorteilhaft haben sich Spannungen im Bereich von etwa 2 bis 12 Volt erwiesen. Die Stromdichte liegt üblicherweise im Bereich von 0,05 bis 100 $mA/cm^2$, vorzugsweise im Bereich von 0,1 bis 20 $mA/cm^2$.

Die während der Elektrolyse anodisch abgeschiedenen Polymeren werden zur Entfernung von anhaftendem Leitsalz mit Lösungsmitteln gewaschen und bei Temperaturen von 30 bis 150°C, vorzugsweise unter Vakuum, getrocknet. Bei Einsatz von Graphit-, Edelmetall- oder ähnlichen Elektroden lassen sich danach die im allgemeinen filmförmig abgeschiedenen Copolymere leicht von der Elektrode ablösen, vor allem wenn Schichtstärken über 5 µm abgeschieden wurden.

Die Polymerisation der Verbindungen aus der Klasse der 5-gliedrigen heterocyclischen Verbindungen, die ein Stickstoff, Sauerstoff oder Schwefel als Heteroatom enthalten, kann auch in Lösung mit Sauerstoff enthaltenden Oxidationsmittel erfolgen, wobei sich Wasser als Lösungsmittel, gegebenenfalls in Abmischung mit organischen mit Wasser mischbaren Lösungsmitteln bewährt haben. Es können aber auch organische Lösungsmittel, wie Dimethylsulfoxid, Methylenchlorid, Methanol, Ethanol, Acetonitril, Sulfolan, Ethylencarbonat, Propylencarbonat, Dioxan oder Tetrahydrofuran, verwendet werden. Bei der Verwendung von organischen mit Wasser nicht mischbaren Lösungsmitteln hat sich das Einarbeiten geringer Wassermengen in feiner Verteilung in das organische Lösungsmittel bewährt. Vorzugsweise wird zur Herstellung der erfindungsgemässen Polymeren jedoch Wasser verwendet. Man arbeitet zweckmässig so, dass die Lösungen 0,1 bis 50, vorzugsweise 1 bis 5 Gew.-% des genannten Heterocyclen oder der Gemische der Heterocyclen enthalten. Zweckmässig verwendet man auf 1 Mol der heterocyclischen Verbindung bzw. Gemischen aus diesen Verbindungen 0,2 bis 10 Mol des Oxidationsmittels. Verwendet man weniger als 1 Mol, so kann man feststellen, dass ein Teil der verwendeten Ausgangssubstanz nicht zu Polymeren umgewandelt wird. Grössere Mengen an Oxidationsmitteln zu verwenden, ist nicht erforderlich, da die Menge ausreicht, die gesamte Menge der Ausgangsstoffe in Polymere umzuwandeln. Ein Überschuss über die angegebene Menge hinaus ist jedoch in den meisten Fällen nicht erforderlich, kann jedoch gelegentlich bestimmte Effekte bewirken. Von der Sauerstoff enthaltenden Oxidationsmitteln haben sich besonders Peroxosäuren und deren Salze, die Peroxodischwefelsäure und deren Alkali- und Ammoniumsalze bewährt. Vorzugsweise werden auch Peroxoorate oder Peroxochromate, wie Natriumperborat oder Kaliumbichromat verwendet. Ausserdem sind Permanganate, wie Kaliumpermanganat geeignet, wenn man diesen Permanganaten geringe Mengen Säuren zusetzt. Auch ist bevorzugt die Verwendung von Wasserstoffsuperoxid, wobei hierbei die Anwesenheit von Leitsalzen unumgänglich ist. Die Umsetzung kann zweckmässig in einem Temperaturbereich von 0 bis 100°, vorzugsweise von 15 bis 40°C erfolgen. Meistens kommt man zu zufriedenstellenden Ergebnissen, wenn die Umsetzung bei Raumtemperatur durchgeführt wird. Den Lösungen sind die o.g. Leitsalze zugesetzt.

Bei den durch die genannten Verfahren erhaltenen Polymerisaten der 5-gliedrigen Heterocyclen handelt es sich um elektrisch hochleitfähige Systeme. Man kann die erfindungsgemässen Homo- und Copolymeren daher auch als Komplexe aus Kationen der Polymeren mit Gegenanionen bezeichnen. Diese Polymeren werden auch als p-gedopte Polyheterocyclen bezeichnet.

Es hat sich gezeigt, dass bei erfindungsgemässer Verwendung der elektrisch leitfähigen Polymerisate die Absorption insbesondere im Wellenzahlenbereich 4000 bis 400 cm$^{-1}$ erfolgt. Bei Einstrahlungswinkeln zwischen 20 und 90° erfolgt eine Totalabsorption. Bei Einstrahlungswinkeln kleiner als 20°, insbesondere kleiner als 5°, ist im Vergleich zu Aluminium oder Edelstahl eine stärker Intensitätsstrahlung als Reflexion gemessen. Die Absorption der Infrarotstrahlen erfolgt bereits bei Schichtdicken des Polymeren von grösser als 2 μm, insbesondere grösser als 5 μm. Meist ist es nicht erforderlich grössere Schichtdicken als 2 bis 20 μm zu verwenden.

So kann man beispielsweise Folien der erfindungsgemäss zu verwendenden Polymerisate auf militärische Fahrzeuge, wie gepanzerte Kampffahrzeuge, Flugzeuge oder Schiffe derart aufbringen, dass die eigene Infrarotstrahlung total absorbiert wird, so dass diese Fahrzeuge als Ziel für Infrarotstrahlen-gesteuerte Flugkörper nicht auffindbar sind. Man kann aber auch mitunter die erfindungsgemäss zu verwendenden Polymeren in Anstrichmittel oder andere Kunststoffe einbetten und entsprechende Oberflächenbeschichtung auf die Fahrzeuge oder die zu schützenden Ziele aufbringen.

## Patentanspruch

Verwendung von elektrisch leitfähigen Homo- und Copolymerisaten von Verbindungen aus der Klasse der 5-gliedrigen heterocyclischen Verbindungen mit konjugierten π-Elektronensystemen mit Stickstoff, Sauerstoff oder Schwefel als Heteroatom, die ein Leitsalzanion enthalten, als Oberflächenbeschichtung auf Fahrzeugen, Flugzeugen oder Schiffen, zur Absorption von Infrarotstrahlung.

## Claim

The use of electrically conductive homopolymers or copolymers of compounds from the class of 5-membered heterocyclic compounds with conjugated π-electron systems containing nitrogen, oxygen or sulphur as heteroatom, which homopolymers and copolymers contain an anion of a conductive salt, as a surface coating on motor vehicles, aircraft or ships for absorbing infrared radiation.

## Revendication

Utilisation d'homo- et de copolymères conducteurs de l'électricité de composés de la classe des composés hétérocycliques pentagonaux à systèmes d'électrons π conjugués, dont l'hétéro-atome est de l'azote, de l'oxygène ou du soufre et qui contiennent un anion d'un sel conducteur pour le revêtement de surfaces de voitures, d'avions ou de navires en vue de l'absorption du rayonnement infrarouge.